# EUROPÄISCHE PATENTSCHRIFT

(11) **EP 3 051 990 B1**
(45) Veröffentlichungstag und Bekanntmachung des Hinweises auf die Patenterteilung: **01.05.2019**
(21) Anmeldenummer: 14761344.2
(22) Anmeldetag: 05.09.2014
(51) Int. Cl.: A47J 43/07

(54) **WERKZEUG FÜR KÜCHENGERÄT MIT ABDECKSCHALE**
TOOL FOR A COOKING DEVICE WITH A COVERING SHELL
OUTIL POUR USTENSILE DE CUISINE MUNI D'UNE COQUE DE PROTECTION

(30) Priorität: 30.09.2013 DE 102013219835
(43) Veröffentlichungstag der Anmeldung: 10.08.2016
(73) Patentinhaber: BSH Hausgeräte GmbH, 81739 München (DE)
(72) Erfinder: GOLAVSEK, Samo, 3312 Prebold (SI); UPLAZNIK, Marko, 3312 Prebold (SI); DECMAN, Igor, 3232 Ponikva (SI); ZLAUS, Uros, 3201 Smartno v Rozni dolini (SI)
(86) Internationale Anmeldenummer: PCT/EP2014/068907
(87) Internationale Veröffentlichungsnummer: WO 2015/043918

(56) Entgegenhaltungen:
- EP-A1- 1 772 087
- EP-A1- 2 845 529
- DE-A1- 19 812 541

## Beschreibung

### Gebiet der Erfindung

Die Erfindung betrifft ein Werkzeug für ein Küchengerät, das eine zu einem Schaft geformte Hülle aufweist, die an einem unteren Ende zu einem im Wesentlichen glockenförmigen Kelch ausgeformt ist, in dem ein durch eine im Schaft gelagerte Welle in Drehung bringbares Messer angeordnet ist, wobei eine Innenwand des Kelches durch eine Abdeckschale gebildet wird. Die Erfindung betrifft weiterhin eine Verwendung einer Abdeckschale zur Anpassung der Form einer Oberfläche einer im Inneren eines Kelches gelegenen Wand, wobei der Kelch sowie ein Schaft aus einer Hülle eines Werkzeugs für Küchengeräte ausgeformt sind und in dem Kelch ein in Drehung bringbares Messer angeordnet ist. Außerdem betrifft die Erfindung ein Küchengerät.

### Hintergrund der Erfindung

Die deutsche Patentschrift DE 44 36 092 C1 offenbart ein Arbeitsgerät zum Rühren oder Zerkleinern von Nahrungsmitteln mit einer Arbeitswelle, die im Bereich eines Abtriebsendes zentrisch in einer in einem Wellengehäuse angeordneten Lagerhülse gelagert ist. Das Wellengehäuse geht im Bereich des Abtriebsendes in eine erweiterte Gehäuseglocke über, deren Innenraum zu einem Innenraum des Wellengehäuses hin durch eine Abdeckplatte getrennt ist. Durch einen umlaufenden Dichtring zwischen der Abdeckplatte und der Gehäuseglocke wird eine einfache Flüssigkeitsabdichtung erreicht.

Die amerikanische Patenschrift US 6,193,404 B1 offenbart ein Handmixer zur Nahrungszubereitung, in dessen Gehäuse ein elektrischer Motor angeordnet ist. Der Motor treibt eine Welle an, die in einem Rohr gelagert ist. An dem Ende des Rohrs ist ein abnehmbares Endstück befestigt. Ein Ende der Welle dringt in einen Innenraum des Endstücks ein. An dem Ende der Welle ist ein Drehwerkzeug befestigt. An der Verbindung zwischen Rohr und Endstück ist eine Dichtung angeordnet, die das Rohr abdichtet.

Die deutsche Offenlegungsschrift DE 197 50 813 A1 offenbart ein Arbeitsgerät zum Rühren oder Zerkleinern von Nahrungsmitteln, das eine von einem Antriebsmotor angetriebene Arbeitswelle aufweist, durch die ein in einer Abschirmung angeordnetes Arbeitswerkzeug in Rotation gebracht werden kann. Im Innern der Abschirmung ist an einem zum Arbeitswerkzeug weisenden Ende eine Abdeckplatte befestigt, die sich senkrecht zur Achse der Arbeitswelle erstreckt. Die Arbeitswelle ist gegenüber der Abdeckplatte durch einen Wellendichtring abgedichtet.

Die deutsche Offenlegungsschrift DE 198 12 541 A1 offenbart eine glockenförmige Abschirmung für die Verwendung insbesondere in einem Stabmixer oder Handrührer, wobei die Abschirmung einen Raum bildet, in dem ein messerähnliches Arbeitswerkzeug angeordnet ist, das von einer Antriebswelle in Drehung versetzt werden kann. Die Oberfläche der Innenwand der Abschirmung weist an ihrem Umfang einzelne nach außen gerichtete Wandabschnitte zur Bildung von Freiräumen auf, die vorwiegend zur Umlenkung, Zerkleinerung und besseren Durchmischung sowie zur Aufnahme und Abfuhr von Nahrungsmitteln dienen. Die Wand der Abschirmung kann noppenartige Ausbuchtungen oder Vertiefungen aufweisen.

Die Druckschrift EP 1 772 087 A1 offenbart ein Werkzeug 1 für ein Küchengerät 100, das eine zu einem Schaft 10 geformte Hülle aufweist, die an einem unteren Ende zu einem glockenförmigen Kelch 11 ausgeformt ist, in dem ein durch eine im Schaft gelagerte Welle 13 in Drehung bringbares Messer angeordnet ist, wobei eine Innenwand des Kelches 11 durch eine Abdeckschale 20 gebildet wird, wobei eine dem Messer zugewandte Oberfläche der Abdeckschale 20 mehrere Krater 21, 22A aufweist. *Der Erfindung zugrunde liegende Aufgabe* Der Erfindung liegt die Aufgabe zugrunde, einen gegenüber dem Stand der Technik verbessertes Werkzeug für ein Küchengerät bereitzustellen, das eine zu einem Schaft geformte Hülle aufweist, die an einem unteren Ende zu einem im Wesentlichen glockenförmigen Kelch ausgeformt ist, in dem ein durch eine im Schaft gelagerte Welle in Drehung bringbares Messer angeordnet ist, wobei eine Innenwand des Kelches durch eine Abdeckschale gebildet wird. Insbesondere soll durch die Erfindung eine im Betrieb eines Küchengeräts auftretende Saugwirkung deutlich reduziert werden, wodurch die Bedienung des Küchengeräts wesentlich vereinfacht werden soll.

Der Erfindung liegt außerdem die Aufgabe zugrunde, eine Verwendung einer Abdeckschale zur Anpassung der Form einer Oberfläche einer im Inneren eines Kelches gelegenen Wand anzugeben, wobei der Kelch sowie ein Schaft aus einer Hülle eines Werkzeugs für Küchengeräte ausgeformt sind und in dem Kelch ein in Drehung bringbares Messer angeordnet ist. Außerdem soll ein verbessertes Küchengerät bereitgestellt werden.

### Erfindungsgemäße Lösung

Die Lösung der gestellten Aufgabe gelingt durch Bereitstellen eines Werkzeugs gemäss Anspruch 1.

Ein erfindungsgemäßes Werkzeug kann zum Vermischen, Pürieren, Häckseln und/oder Zerschneiden eines Guts, insbesondere von Nahrungsmitteln, die weitestgehend fest und/oder flüssig sein können verwendbar sein. Beispielhafte Verwendungen umfassen das Pürieren von Obst und/oder Gemüse, das Mischen von Flüssigkeiten oder das Aufschlagen von Eiweiß oder Milchprodukten. Ein Küchengerät kann ein Handgerät, insbesondere ein Stabmixer oder Handrührer sein. Küchengeräte sind elektrisch betreibbar und werden entweder von Batterien oder einem Netzkabel mit Energie versorgt.

Das Werkzeug umfasst eine Hülle, die zu einem im Wesentlichen zylinderförmigen länglichen Schaft geformt ist, in dessen Innerem eine Welle gelagert ist. An einem unteren Ende des Schafts ist die Hülle zu einem Kelch ausgeformt, der sich nach unten glockenförmig aufweitet und geöffnet ist. Die Welle ragt an einem unteren Ende in einen durch eine Innenwand des Kelchs umgebenen Arbeitsraum hinein. An diesem unteren Ende der Welle ist ein im Wesentlichen quer zur Längsrichtung der Welle verlaufendes Messer angeordnet, das von der Welle in Rotation versetzt werden kann. Die Welle und das Messer rotieren im Betrieb des Küchengeräts um eine gemeinsame Drehachse, die in Längsrichtung des Schafts und meist entlang der Welle verläuft. Erfindungsgemäß wird eine Innenwand des Kelches durch eine Abdeckschale gebildet. Diese kann ebenfalls als Teil der Hülle geformt sein oder Teil eines anderen Bauteils sein.

Im Betrieb mit einem Küchengerät kann durch die Rotation des Messers ein zu bearbeitendes Gut durch die Öffnung des Kelches angesaugt, zerkleinert und durch die vom Messer auf das Gut übertragenen Fliehkräfte zu einem großen Teil in Richtung der Innenwand des Kelchs beschleunigt werden. Insbesondere bei längerem Betrieb kann insbesondere bei einem im Wesentlichen flüssigen Gut und hoher Umdrehungszahl des Messers durch Bildung eines Wirbels eine erhebliche Saugwirkung auftreten, welche eine im Wesentlichen axial gerichtete Kraft auf das Werkzeug bewirkt, wodurch eine kontrollierte Führung des Geräts erschwert werden kann und im Extremfall dazu führen kann, dass sich das Werkzeug an einem Boden eines Gefäßes festsaugt, wodurch die Öffnung des Kelchs blockiert und ein Vermischen und Zerkleinern des Guts behindert werden kann.

Gemäß der Erfindung liegen Krater als Vertiefungen auf einer Oberfläche vor. Der Umriss eines Kraters auf der Oberfläche ist im Wesentlichen rund, beispielsweise kreisrund, elliptisch oder oval, oder vieleckig, beispielsweise hexagonal oder oktogonal, oder aus einer Kombination von runden und eckigen Abschnitten, beispielsweise als Sechseck mit abgerundeten Ecken geformt. Im Querschnitt senkrecht zur Oberfläche weisen die Krater ein rundes, beispielsweise halbkreisförmiges, parabelförmiges oder U-förmiges, oder eckiges, beispielsweise trichterförmiges oder rechteckiges Profil auf. Die auf der Oberfläche der Abdeckschale angeordneten Krater weisen eine einheitliche oder voneinander verschiedene der zuvor beschriebenen Formen auf. An den auf der dem Messer zugewandten Oberfläche der Abdeckschale angeordneten Kratern, sollen im Betrieb des Werkzeugs mit einem Küchengerät turbulente Verwirbelungen in einem im Wesentlichen flüssigen Gut erzeugt werden. Diese turbulenten Verwirbelungen können eine Saugwirkung, die wie oben beschrieben die Bedienung des Küchengeräts erschweren kann, vermindern. Dadurch soll die Bedienung des Küchengeräts wesentlich vereinfacht werden. Eine Saugwirkung ist allerdings insoweit erwünscht, als dass sie ein Ansaugen und Vermischen des zu bearbeitenden Guts in den Arbeitsraum unterstützt.

Erfindungsgemäss ist vorgesehen, dass die Abdeckschale mindestens 70% der Kelchwand im Innern des Kelches bedeckt. Dadurch, dass ein Großteil der inneren Oberfläche der Kelchwand von einer Abdeckschale bedeckt ist, kann der Vorteil erreicht werden, dass die den Arbeitsraum begrenzende Oberfläche überwiegend durch die Abdeckschale definiert ist. Die den Arbeitsraum begrenzende Oberfläche kann somit unabhängig von der Form des Kelches gestaltet werden und verschieden geformte, auf eine bestimmte Anwendung angepasste Strukturen aufweisen, die eine im Betrieb des Werkzeugaufsatzes mit einem Küchengerät auftretende Saugwirkung vermindern sollen, wodurch die Bedienung des Küchengeräts mit dem Werkzeug erheblich vereinfacht werden kann.

Es hat sich gezeigt, dass die Abdeckschale besonders vorteilhaft ist, wenn sie erfindungsgemäss mindestens 70% der inneren Kelchwand bedeckt. Die Abdeckschale soll nämlich die Form der Oberfläche der Innenseite der Kelchwand derart abändern, zum Beispiel durch wie im Folgenden beschriebenen auf der Oberfläche der Abdeckschale angeordneten Trennrippen, so dass eine im Betrieb des Werkzeugs mit einem Küchengerät durch einen Wirbel verursachte Saugwirkung vermindert wird. Diese Reduzierung der Saugwirkung kann umso effektiver erfolgen, je größer der durch die Abdeckschale bedeckte Anteil der Oberfläche der Innenseite der Kelchwand ist.

Zur Lösung der gestellt Aufgabe schlägt die Erfindung außerdem die Verwendung einer Abdeckschale zur Anpassung der Form einer Oberfläche einer im Inneren eines Kelches gelegenen Wand vor, wobei der Kelch sowie ein Schaft aus einer Hülle eines Werkzeugs für Küchengeräte ausgeformt sind und in dem Kelch ein in Drehung bringbares Messer angeordnet ist. Erfindungsgemäß weist eine dem Messer zugewandte Oberfläche der Abdeckschale eine Vielzahl von Kratern auf. Die Lösung der gestellten Aufgabe gelingt außerdem durch Bereitstellen eines Küchengeräts, das einen vorgenannten Werkzeugaufsatz umfasst.

### Bevorzugte Ausgestaltungen der Erfindung

Es ist bevorzugt, dass eine dem Messer zugewandte Seite der Abdeckschale im Wesentlichen konkav geformt ist. Besonders vorzugsweise weist die Abdeckschale in der Mitte eine Öffnung auf, durch die ein Endstück des Schafts, in dem die Welle gelagert ist in den Arbeitsraum durchstößt. Eine konkave Form der dem Messer zugewandten Seite der Abdeckschale hat den erreichbaren Vorteil, dass ein im Betrieb des Werkzeugs mit einem Küchengerät gebildeter Wirbel besonders geringe Turbulenzen aufweisen kann, wodurch eine Saugwirkung vermindert werden kann.

In einer bevorzugten Ausführung weist eine dem Messer zugewandte Oberfläche der Abdeckschale mindestens zwei Trennrippen auf. Eine Trennrippe ist eine wandartige Struktur, die den Innenraum des Kelches in Bereiche unterteilen soll. Die Trennrippen sind vorzugsweise vom Schaft ausgehend radial nach außen zur Kelchwand angeordnet. Die Trennrippen heben sich vorzugsweise in axialer Richtung von der Abdeckschale ab. Besonders vorzugsweise nähern sich die Trennrippen einem Wirkungsbereich des Messers bis zu einem Millimeter an. Der Wirkungsbereich des Messers ist das durch Rotation des Messers erzeugte Volumen eines Rotationskörpers, in das kein Teil des Werkzeugs eindringend darf, weil sonst die Bewegung des Messers behindert würde. Die Trennrippen können in vorteilhafter Weise den Arbeitsraum in Bereiche unterteilen, in denen ein im Betrieb des Werkzeugs mit einem Küchengerät gebildeter Wirbel in kleinere Wirbel aufgebrochen werden kann wodurch eine resultierende Saugwirkung vermindert werden kann.

Es ist erfindungsgemäss, dass eine dem Messer zugewandte Oberfläche der Abdeckschale eine Vielzahl von Kratern aufweist. Die Krater bewirken, dass die Dicke einer turbulenten Trennschicht zwischen Innenwand und dem flüssigen Gut verringert wird. Somit kann der laminare Anteil einer Strömung in vorteilhafter Weise näher an die Oberfläche der Abdeckschale verlegt werden. Die in einer bevorzugten Ausführung auf der Oberfläche der Abdeckschale angeordneten Trennrippen oder andere Strukturen können somit effektiver eine Saugwirkung vermindern. Erfindungsgemäss liegt die Anzahl der Krater zwischen 50 und 400. Besonders vorzugsweise sind die Krater in einem geometrischen Muster an der Oberfläche angeordnet. Besonders vorzugsweise sind Gruppen von wenigstens sieben benachbarten Kratern in einem geometrischen Muster angeordnet, beispielsweise in einem rechteckigen oder hexagonalen Muster. Erfindungsgemäss sind auf einem überwiegenden Anteil der Oberfläche der Abdeckschale Krater angeordnet.

Es ist bevorzugt, dass die Krater einen maximalen Durchmesser von 5 Millimetern aufweisen. Der Durchmesser ist das maximale lichte Maß eines Kraters, das parallel zu der der Oberfläche, in der der Krater angeordnet ist, gemessen wird. Es hat sich gezeigt, dass durch Krater mit einem maximalen Durchmesser von 5 Millimetern verursachte turbulente Verwirbelungen besonders effizient eine Saugwirkung minimieren können. In einer bevorzugten Ausführung können die Durchmesser der Krater untereinander verschieden sein. Vorzugsweise ist die Tiefe beziehungsweise Höhe der Krater kleiner als der Durchmesser der Krater. In einer alternativen Ausführung können auch Krater mit einem Durchmesser von mehr als 6 Millimetern auf der Oberfläche der Abdeckschale angeordnet sein.

In einer bevorzugten Ausführung der Erfindung ist die Abdeckschale als separates Bauteil im Spritzgussverfahren gefertigt. Vorzugsweise ist die Abdeckschale aus Kunststoff gefertigt. Hiermit kann der Vorteil erreicht werden, dass die Abdeckschale kostengünstig in großen Stückzahlen mit gleichbleibenden, geringen mechanischen Toleranzen von typischerweise weniger als einem Millimeter hergestellt werden kann. Durch geringe mechanische Toleranzen kann erreicht werden, dass die Abdeckschale optimal in den Kelch eingepasst werden kann. Dadurch, dass die Abdeckschale vorzugsweise ein separates Bauteil ist, kann sie unabhängig von den übrigen Bauteilen des Werkzeugs gefertigt werden. In einer alternativen Ausführung ist das Werkzeug als Ganzes, inklusive der Abdeckschale, einstückig im Spritzgussverfahren gefertigt. Somit kann vorteilhaft eine besonders kostengünstige Ausführung des Werkzeugs realisiert werden.

Bei einem bevorzugten Werkzeug ist die zum Schaft und Kelch geformte Hülle aus Metall gefertigt. Eine Hülle aus Metall ist vorteilhafterweise besonders robust gegenüber mechanischen Beanspruchungen und hat eine hochwertig anmutende Optik, welche sich positiv auf die Kaufentscheidung eines Benutzers auswirken kann. Besonders vorzugsweise ist die Hülle aus Edelstahl gefertigt. Eine Hülle aus Edelstahl hat den erreichbaren Vorteil, dass sie leicht zu reinigen, korrosionsbeständig und hygienisch ist. In einer alternativen Ausführung ist die Hülle aus Aluminium gefertigt, wodurch die Hülle kostengünstiger und leichter werden kann.

Es ist bevorzugt, dass die Hülle des Werkzeugs von der Abdeckschale im Wesentlichen wasserdicht verschlossen ist. Vorzugsweise wird die abdichtende Wirkung mit Hilfe eines Dichtungsrings erzielt. Besonders vorzugsweise, weist die Abdeckschale eine umlaufende Nut zur Aufnahme des Dichtungsrings auf. Besonders vorzugsweise ist die Hülle durch die Abdeckschale auch gegen Eindringen von öligen Flüssigkeiten abgedichtet. In einer alternativen Ausführung wird die Hülle von der Abdeckschale ohne Verwendung eines Dichtungsrings im Wesentlichen wasserdicht verschlossen. Durch das Abdichten der Hülle kann der vorteilhaft erreicht werden, dass keine Bestandteile des zu verarbeitenden Guts in die Hülle eindringt. Hierdurch ist das Werkzeug vor Korrosion geschützt und außerdem wird eine Bildung von Bakterien im Inneren der Hülle verhindert.

Ein bevorzugtes Werkzeug kann abnehmbar an ein Küchengerät angekuppelt werden. Ein bevorzugtes Küchengerät umfasst eine Antriebseinheit, die im Betrieb über eine Kupplung die im Schaft gelagerte Welle in Rotation versetzt. Eine bevorzugte Antriebseinheit ist elektromotorisch. Vorzugsweise wird das Werkzeug über die am Kopfteil angeordnete Kupplung an das Küchengerät gekuppelt. Eine bevorzugte Kupplung umfasst einen Verschlussmechanismus, der durch eine Drehung des Werkzeugs oder Betätigen eines Knopfes, der entweder am Küchengerät oder am Werkzeug angeordnet ist, entriegelbar ist. Ein vom Küchengerät lösbares Werkzeug hat den erreichbaren Vorteil, dass es leichter gereinigt werden kann. Außerdem kann somit das Küchengerät mit verschiedenen Werkzeugen kombinierbar sein. Das erfindungsgemäße Werkzeug kann außerdem als Zubehörteil für bereits verkaufte Küchengeräte angeboten werden. In einer alternativen Ausführung ist das Werkzeug fest mit einem Küchengerät verbunden und ist somit nicht abnehmbar.

### Kurzbeschreibung der Zeichnungen

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- Figur 1:: In Fig. 1 ist eine perspektivische Ansicht eines erfindungsgemäßen Werkzeugs in Blickrichtung auf die Öffnung des Kelches dargestellt.
- Figur 2:: In Fig. 2 ist eine Schnittansicht der Abdeckschale dargestellt. Fig. 2a zeigt eine nicht erfindungsgemässe Ausführung ohne, Fig. 2b zeigt eine erfindungsgemässe Ausführung mit Kratern.

### Ausführliche Beschreibung der Erfindung anhand von einem Ausführungsbeispiel

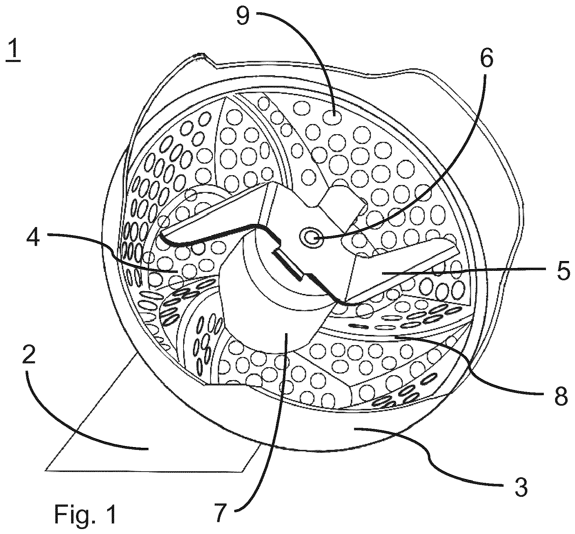

In Fig. 1 ist ein erfindungsgemäßes Werkzeug 1 in perspektivischer Ansicht dargestellt mit Blickrichtung auf die Öffnung eines am Ende eines Schaftes 2 ausgeformten Kelches 3. Kelch 3 und Schaft 2 sind aus einer Hülle geformt, die aus Edelstahl gefertigt ist, wodurch die Hülle besonders einfach zu säubern und korrosionsbeständig ist. Der im Wesentlichen glockenförmige Kelch 3 weist im Inneren einen Arbeitsraum auf. Die Innenwand des Arbeitsraumes wird zu etwa 90% von einer Abdeckschale 4 bedeckt. Die Abdeckschale 4 ist aus einem Kunststoff im Spritzgussverfahren hergestellt und kann somit besonders kostengünstig in großen Stückzahlen hergestellt werden. Mittig im Arbeitsraum ist ein Messer 5 angeordnet, das über eine im Schaft 2 gelagerte Welle 6 in Drehung versetzt werden kann. Ein Lager der Welle 6 ist in einem Endstück 7 des Schafts 2 angeordnet, das die Abdeckschale 4 mittig durchstößt. Die Abdeckschale 4 weist außerdem drei vom Endstück 7 des Schafts 2 ausgehende, sich in axialer Richtung abhebende Trennrippen 8 auf. Die Trennrippen 8 weisen eine geschwungene Form, ähnlich wie die Arme eine Spiralgalaxie auf. Im Betrieb mit einem Küchengerät, das eine Antriebseinheit umfasst, wird das Messer 5 in Rotation versetzt. Im Betrieb rotiert das Messer 5 in Blickrichtung gegen den Uhrzeigersinn. Ein im Wesentlichen flüssiges Gut wird durch die Rotation des Messers 5 ebenfalls in Rotation versetzt und fließt auf die konvexen Seitenflächen der Trennrippen 8 zu. Die Trennrippen 8 lenken die Strömung der Flüssigkeit um, so dass axial stehende Wirbel ausgebildet werden, wodurch eine Saugwirkung vermindert wird. Dadurch ermöglicht das Werkzeug 1 eine besonders einfache Bedienung. Weiterhin weist die Oberfläche der Abdeckschale 4 eine Vielzahl von runden Vertiefungen auf, die als Krater 9 bezeichnet werden. Die Krater 9 sollen die Dicke einer Grenzschicht einer Strömung zwischen der Oberfläche und der Flüssigkeit verringern. Hierdurch kann die Saugkraft noch effektiver vermindert werden und die Bedienung durch das Werkzeug noch einfacher werden.

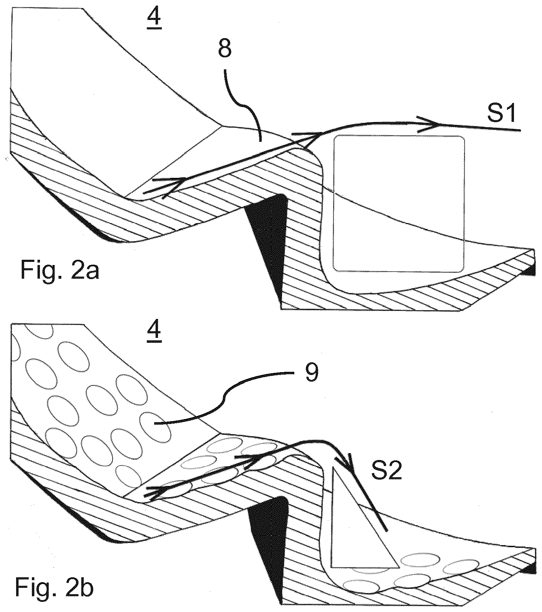

Fig. 2 zeigt zwei Schnittansichten durch die Abdeckschale 4. In Fig. 2a ist eine Abdeckschale ohne Krater und in Fig. 2b eine Abdeckschale mit Kratern 9 dargestellt. Der Schnitt verläuft durch eine Trennrippe 8. Anhand von Fig. 2a und 2b wird die Wirkung der Krater 9 illustriert. Der Strömungsverlauf S1 in Fig. 2a ohne Krater zeigt eine an der Kante der Trennrippe entstehende turbulente Grenzschicht, angedeutet durch ein Quadrat. Wie in Fig. 2b illustriert, verläuft die Strömung S2 im Bereich hinter der Kante der Trennrippe wesentlich näher an der Oberfläche der Abdeckschale entlang, was durch ein Dreieck angedeutet wird.

### Bezugszeichenliste

1. Werkzeug
2. Schaft
3. Kelch
4. Abdeckschale
5. Messer
6. Welle
7. Endstück des Schafts
8. Trennrippe
9. Krater
S1. Strömung ohne Krater
S2. Strömung mit Kratern

## Patentansprüche

1. Werkzeug (1) für ein Küchengerät, das eine zu einem Schaft (2) geformte Hülle aufweist, die an einem unteren Ende zu einem im Wesentlichen glockenförmigen Kelch (3) ausgeformt ist, in dem ein durch eine im Schaft gelagerte Welle (6) in Drehung bringbares Messer (5) angeordnet ist, wobei eine Innenwand des Kelches (3) durch eine Abdeckschale (4) gebildet wird, wobei eine dem Messer (5) zugewandte Oberfläche der Abdeckschale (4) eine Vielzahl von Kratern (9) aufweist, wobei die Vielzahl, nämlich zwischen 50 und 400, von als Vertiefungen ausgebildeten Kratern (9) auf einem überwiegenden Anteil der Oberfläche der Abdeckschale (4) angeordnet ist, wobei die Abdeckschale (4) mindestens 70% der Kelchwand im Innern des Kelches (3) bedeckt.

2. Werkzeug (1) nach Anspruch 1, **dadurch gekennzeichnet, dass** eine dem Messer (5) zugewandte Seite der Abdeckschale (4) im Wesentlichen konkav geformt ist.

3. Werkzeug (1) nach einem der vorhergehenden Ansprüche, **dadurch gekennzeichnet, dass** eine dem Messer (5) zugewandte Oberfläche der Abdeckschale (4) mindestens zwei Trennrippen (8) aufweist.

4. Werkzeug (1) nach einem der vorhergehenden Ansprüche, **dadurch gekennzeichnet, dass** die Krater (9) einen maximalen Durchmesser von 5 Millimetern aufweisen.

5. Werkzeug (1) nach einem der vorhergehenden Ansprüche, **dadurch gekennzeichnet, dass** die Abdeckschale (4) als separates Bauteil im Spritzgussverfahren gefertigt ist.

6. Werkzeug (1) nach einem der vorhergehenden Ansprüche, **dadurch gekennzeichnet, dass** die zum Schaft (2) und Kelch (3) geformte Hülle aus Metall gefertigt ist.

7. Werkzeug (1) nach einem der vorhergehenden Ansprüche, **dadurch gekennzeichnet, dass** die Hülle des Werkzeugs (1) von der Abdeckschale im Wesentlichen wasserdicht verschlossen ist.

8. Werkzeug (1) nach einem der vorhergehenden Ansprüche, **dadurch gekennzeichnet, dass** das Werkzeugs (1) abnehmbar an ein Küchengerät angekuppelt werden kann.

9. Verwendung einer Abdeckschale (4) zur Anpassung der Form einer Oberfläche einer im Inneren eines Kelches (3) gelegenen Wand, wobei der Kelch (3) sowie ein Schaft (2) aus einer Hülle eines Werkzeugs (1) für Küchengeräte ausgeformt sind und in dem Kelch (3) ein in Drehung bringbares Messer (5) angeordnet ist, wobei eine dem Messer (5) zugewandte Oberfläche der Abdeckschale (4) eine Vielzahl von Kratern (9) aufweist, wobei die Vielzahl, nämlich zwischen 50 und 400, von als Vertiefungen ausgebildeten Kratern (9) auf einem überwiegenden Anteil der Oberfläche der Abdeckschale (4) angeordnet ist, wobei die Abdeckschale (4) mindestens 70% der Kelchwand im Innern des Kelches (3) bedeckt.

10. Küchengerät, **dadurch gekennzeichnet, dass** das Küchengerät ein Werkzeug (1) nach einem der Ansprüche 1 bis 8 umfasst.

## Claims

1. Tool (1) for a cooking appliance, which has a sleeve shaped to form a shaft (2), which is shaped at a lower end to form a substantially bell-shaped cup (3), in which a spindle (6) mounted in the shaft is arranged in a knife (5) which can be made to rotate, wherein an inner wall of the cup (3) is formed by a cover shell (4), wherein a surface of the cover shell (4) facing the knife (5) has a plurality of craters (9), wherein the plurality, namely between 50 and 400, of craters (9) embodied as depressions is arranged on a main part of the surface of the cover shell (4), wherein the cover shell (4) covers at least 70% of the cup wall in the inside of the cup (3).

2. Tool (1) according to claim 1, **characterised in that** a side of the cover shell (4) facing the knife (5) is essentially shaped to be concave.

3. Tool (1) according to one of the preceding claims, **characterised in that** a surface of the cover shell (4) facing the knife (5) has at least two separating fins (8).

4. Tool (1) according to one of the preceding claims, **characterised in that** the craters (9) have a maximum diameter of 5 millimetres.

5. Tool (1) according to one of the preceding claims, **characterised in that** the cover shell (4) is manufactured as a separate component in the injection moulding process.

6. Tool (1) according to one of the preceding claims, **characterised in that** the sleeve shaped to form the shaft (2) and cup (3) is manufactured from metal.

7. Tool (1) according to one of the preceding claims, **characterised in that** the sleeve of the tool (1) is closed in a substantially water-tight manner by means of the cover shell.

8. Tool (1) according to one of the preceding claims, **characterised in that** the tool (1) can be removably coupled to a cooking appliance.

9. Use of a cover shell (4) for adapting the shape of a surface to a wall positioned in the inside of a cup (3), wherein the cup (3) and a shaft (2) are moulded from a sleeve of a tool (1) for cooking appliances and a knife (5) which can be made to rotate is arranged in the cup (3), wherein a surface of the cover shell (4) facing the knife (5) has a plurality of craters (9), wherein the plurality, namely between 50 and 400, of craters (9) embodied as depressions is arranged on a main part of the surface of the cover shell (4), wherein the cover shell (4) covers at least 70% of the cup wall in the inside of the cup (3).

10. Cooking appliance, **characterised in that** the cooking appliance comprises a tool (1) according to one of claims 1 to 8.

## Revendications

1. Outil (1) pour un ustensile de cuisine, lequel présente une enveloppe façonnée en une tige (2) qui, sur une extrémité inférieure, est façonnée en une coupelle (3) essentiellement en forme de cloche, dans laquelle est disposée une lame (5) pouvant être mise en rotation par un arbre (6) logé dans la tige, une paroi intérieure de la coupelle (3) étant formée par une coque de recouvrement (4), une surface de la coque de recouvrement (4), tournée vers la lame (5), présentant une pluralité de cratères (9), la pluralité, à savoir entre 50 et 400, de cratères (9) réalisés en tant qu'approfondissements étant disposée sur une partie principale de la surface de la coque de recouvrement (4), la coque de recouvrement (4) recouvrant à l'intérieur de la coupelle (3) au moins 70% de la paroi de coupelle.

2. Outil (1) selon la revendication 1, **caractérisé en ce qu'**un côté de la coque de recouvrement, (4), tourné vers la lame (5), est essentiellement formé de manière concave.

3. Outil (1) selon l'une quelconque des revendications précédentes, **caractérisé en ce qu'**une surface de la coque de recouvrement (4), tournée vers la lame (5), présente au moins deux nervures de séparation (8).

4. Outil (1) selon l'une quelconque des revendications précédentes, **caractérisé en ce que** les cratères (9) présentent un diamètre maximal de 5 millimètres.

5. Outil (1) selon l'une quelconque des revendications précédentes, **caractérisé en ce que** la coque de recouvrement (4) est fabriquée suivant le procédé de moulage par injection en tant que composant séparé.

6. Outil (1) selon l'une quelconque des revendications précédentes, **caractérisé en ce que** l'enveloppe façonnée en tige (2) et coupelle (3) est fabriquée en métal.

7. Outil (1) selon l'une quelconque des revendications précédentes, **caractérisé en ce que** l'enveloppe de l'outil (1) est fermée par la coque de recouvrement de manière essentiellement étanche à l'eau.

8. Outil (1) selon l'une quelconque des revendications précédentes, **caractérisé en ce que** l'outil (1) peut être accouplé à un ustensile de cuisine de manière amovible.

9. Utilisation d'une coque de recouvrement (4) pour l'adaptation de la forme d'une surface d'une paroi située à l'intérieur d'une coupelle (3), la coupelle (3) ainsi qu'une tige (2) étant formées à partir d'une enveloppe d'un outil (1) pour ustensiles de cuisine, et une lame (5) pouvant être mise en rotation étant disposée dans la coupelle (3),
une surface de la coque de recouvrement (4), tournée vers la lame (5), présentant une pluralité de cratères (9), la pluralité, à savoir entre 50 et 400, de cratères (9) réalisés en tant qu'approfondissements étant disposée sur une partie principale de la surface de la coque de recouvrement (4), la coque de recouvrement (4) recouvrant à l'intérieur de la coupelle (3) au moins 70% de la paroi de coupelle.

10. Ustensile de cuisine, **caractérisé en ce que** l'ustensile de cuisine comprend un outil (1) selon l'une quelconque des revendications 1 à 8.
